# EUROPÄISCHE PATENTSCHRIFT

(11) **EP 2 805 071 B1**
(45) Veröffentlichungstag und Bekanntmachung des Hinweises auf die Patenterteilung: **22.02.2017**
(21) Anmeldenummer: 13711587.9
(22) Anmeldetag: 01.03.2013
(51) Int. Cl.: F16C 17/02, F16C 32/04, F16C 33/12, F16C 39/02, H02K 7/09, F16C 33/10

(54) **MASCHINE MIT FANGLAGER MIT HYBRIDANORDNUNG**
MACHINE WITH SAFETY BEARING IN A HYBRID ARRANGEMENT
MACHINE COMPRENANT UN PALIER D'ARRÊT DANS UN AGENCEMENT HYBRIDE

(30) Priorität: 02.03.2012 DE 102012203340
(43) Veröffentlichungstag der Anmeldung: 26.11.2014
(73) Patentinhaber: Siemens Aktiengesellschaft, 80333 München (DE)
(72) Erfinder: KÜMMLEE, Horst, 13505 Berlin (DE)
(86) Internationale Anmeldenummer: PCT/EP2013/054127
(87) Internationale Veröffentlichungsnummer: WO 2013/127980

(56) Entgegenhaltungen:
- EP-A1- 0 499 309
- EP-A2- 0 411 695
- DE-A1- 3 813 804
- DE-A1-102009 019 593
- US-A- 5 693 994

## Beschreibung

Die vorliegende Erfindung betrifft eine Maschine,
- wobei die Maschine einen Stator und einen Rotor aufweist,
- wobei der Rotor eine Rotorwelle aufweist,
- wobei die Rotorwelle in Lagern gelagert ist, so dass der Rotor um eine Rotationsachse rotierbar ist,
- wobei die Lager als aktive Magnetlager ausgebildet sind, in denen der Rotor berührungslos gelagert ist,
- wobei den aktiven Magnetlagern jeweils ein Fanglager zugeordnet ist, von denen der Rotor bei einem Ausfall des jeweiligen aktiven Magnetlagers gefangen wird,
- wobei das jeweilige Fanglager eine auf der Rotorwelle angeordnete Laufbuchse und eine auf dem Stator angeordnete Gleiteinrichtung aufweist.

Derartige Maschinen sind allgemein bekannt.

In Magnetlagern erfolgt eine berührungslose Lagerung von Wellen. Es treten daher kein Verschleiß und nahezu keine Reibungsverluste auf. Magnetlager müssen jedoch aktiv sein, d. h. mit Strom versorgt werden. Sie können daher ausfallen. Aus diesem Grund muss eine kontaktbehaftete Notfalllagerung (= Fanglager) vorhanden sein. Diese Notfalllagerungen stellen den sicheren Auslauf des Rotors bei einem Ausfall der aktiven Magnetlagerung sicher. Sie verschleißen, sofern sie benötigt werden, relativ schnell und müssen daher auswechselbar sein.

Im Stand der Technik werden bei Rotoren hoher Drehzahl - beispielsweise 5000 U/min und mehr - und/oder hohem Gewicht - beispielsweise 5 Tonnen und mehr - oftmals Fanglager verwendet, die aus einer auf der Rotorwelle angeordneten Laufbuchse und einer mit der Laufbuchse zusammenwirkenden, am Stator angeordneten Gleiteinrichtung bestehen. Die Laufbuchsen bestehen im Stand der Technik aus hochfesten Kupferlegierungen (insbesondere Chrom-Nickel-Silikon-Kupfer-Legierungen), welche thermisch oder mit Öldruckverfahren auf die Rotorwelle aufgezogen werden. Die Laufbuchsen müssen zum einen eine sehr hohe Wärmeleitfähigkeit aufweisen, um die beim Auslaufen des Rotors auftretende Reibungsenergie aufnehmen und ableiten zu können. Weiterhin müssen die Laufbuchsen die erforderliche mechanische Stabilität aufweisen.

Zur Sicherstellung eines festen Sitzes der Laufbuchsen auf der Rotorwelle werden die Laufbuchsen mit einem hohen Schrumpfübermaß versehen. Dies führt zu hohen tangentialen Spannungen. Die hochfesten Kupferlegierungen des Standes der Technik neigen jedoch unter hoher statischer Belastung zu Spannungsrelaxationserscheinungen, welch zu einem Auflösen der Korngrenzen mit nachfolgendem plötzlichen Versagen der Buchsen führen können. Bereits relativ niedrige Temperaturniveaus (unter 100°C) können ausreichen, um derartige Schädigungen zu forcieren.

Die Patentanmeldung US 5,693,994 A offenbart die Merkmale des Oberbegriffs des Anspruchs 1, eine Fanglageranordnung für ein Magnetlager, aufweisend ein stationär trocken laufendes Lagermaterial und einen drehbaren Ring, welches bei einem Ausfall des Magnetlagers als Ersatz läuft. Um adhäsiven Verschleiß aufgrund lokalen Verschweißens oder Schmelzens von Lagermaterial an Oberflächenunebenheiten, welche vom Material des Rings, welches gewählt wurde, um zentrifugalen Belastungen bei hohen Drehzahlen standzuhalten, nicht angemessen entfernt werden können, ist die Kontaktfläche des Rings mit einer Schicht aus Kupfer überzogen, auf welcher eine dünne Schicht aus Titannitrid abgeschieden ist.

Die Patentanmeldung DE 3813804 A1 offenbart Schichtwerkstoffe oder Schichtwerkstücke mit einer an der einen Oberfläche einer festen Trägerschicht angebrachten Funktionsschicht, insbesondere Gleitschicht, beispielsweise als feste Dispersionsschicht, mit einer Matrix mit mindestens einem aufschmelzbaren Bestandteil und Dispersionselementen, die zumindest in festem Zustand im Werkstoff der Matrix unlöslich oder nur in geringerer als vorhandener Menge löslich sind oder aus einem anderen für tribologische Zwecke anwendbaren Gemisch von nicht oder nur in geringerer als vorhandener Menge ineinander löslichen Bestandteilen.

Die Aufgabe der vorliegenden Erfindung besteht darin, das Fanglager einer Maschine der eingangs genannten Art derart weiter zu entwickeln, dass die Probleme des Standes der Technik nicht mehr auftreten.

Die Aufgabe wird durch eine Maschine mit den Merkmalen des Anspruchs 1 gelöst. Vorteilhafte Ausgestaltungen der Maschine sind Gegenstand der abhängigen Ansprüche 2 bis 10.

Erfindungsgemäß ist vorgesehen,
- dass die jeweilige Laufbuchse einen radial innen angeordneten Innenring aufweist, mittels dessen die Laufbuchse auf der Rotorwelle befestigt und gehalten ist,
- dass die jeweilige Laufbuchse einen den Innenring radial außen umgebenden Außenring aufweist, der bei einem Ausfall des jeweiligen aktiven Magnetlagers in der Gleiteinrichtung des jeweiligen Fanglagers gleitet,
- dass der Innenring und der Außenring aus voneinander verschiedenen Materialien bestehen und
- dass der Innenring und der Außenring stoffschlüssig miteinander verbunden sind.

Die stoffschlüssige Verbindung zwischen Innenring und Außenring kann insbesondere in einer Verschweißung bestehen. Der Innenring und der Außenring können also miteinander verschweißt sein. Die Verschweißung kann insbesondere durch einen Diffusionsschweißprozess bewirkt werden.

In der Regel besteht der Innenring aus einem Metall. Insbesondere kann er aus Stahl bestehen.

Der Außenring besteht in der Regel aus einer Kupferlegierung. Alternativ kann der Außenring aus einer Pulvermischung von Kupfer und Aluminiumoxid oder Kupfer und einem Carbid bestehen. Hierbei können insbesondere bereits die einzelnen Pulverkörner der Pulvermischung aus den genannten Materialien bestehen.

Zum Herstellen einer guten stoffschlüssigen Verbindung zwischen dem Innenring und dem Außenring kann es erforderlich sein, zwischen dem Innenring und dem Außenring eine Zwischenschicht anzuordnen. Die Zwischenschicht kann beispielsweise aus Nickel bestehen.

Es ist möglich, dass in der Laufbuchse radial und/oder axial verlaufende Ölbohrungen angeordnet sind. Falls dies der Fall ist, sind die Ölbohrungen jedoch nur im Innenring vorhanden. Der Außenring weist keine derartigen Bohrungen auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Maschine,
- FIG 2: eine Lageranordnung der Maschine von FIG 1,
- FIG 3: ein Fanglager und
- FIG 4: einen Ausschnitt von FIG 3.

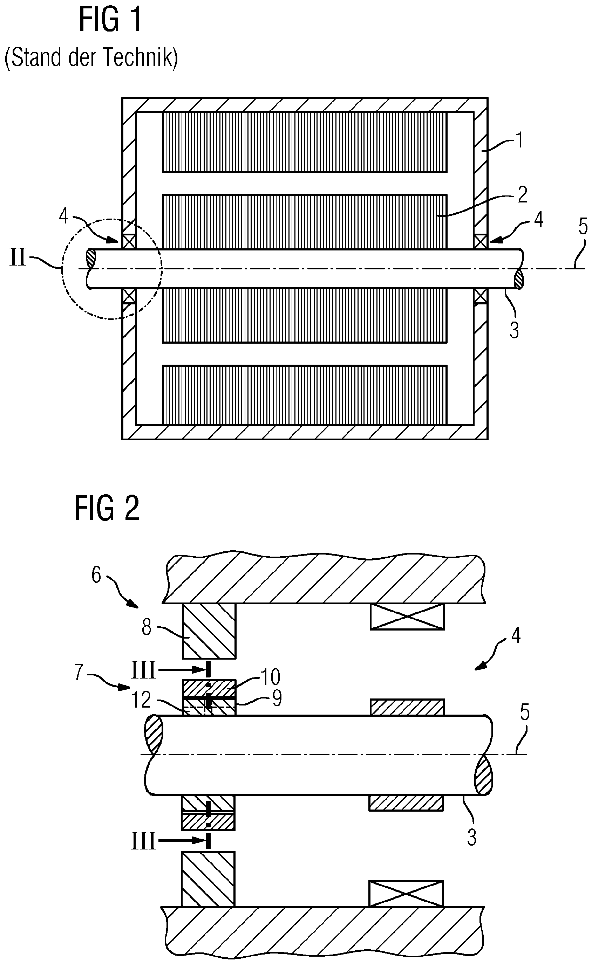

Gemäß FIG 1 weist eine Maschine einen Stator 1 und einen Rotor 2 auf. Es ist möglich, dass der Stator 1 und der Rotor 2 die elektromagnetischen Wirkteile einer elektrischen Maschine sind. Dies ist jedoch nicht zwingend erforderlich. Gemeint ist mit den Begriffen "Stator" und "Rotor" lediglich, dass es sich einerseits um ein feststehendes Teil (Stator 1) und andererseits um ein rotierendes Teil (Rotor 2) handelt. Es kann sich bei der Maschine also - beispielsweise - um ein Getriebe, eine Pumpe, eine Turbine usw. handeln.

Der Rotor 2 weist eine Rotorwelle 3 auf. Die Rotorwelle 3 ist in Lagern 4 gelagert. Der Rotor 2 ist daher um eine Rotationsachse 5 rotierbar. Die Rotationsachse 5 verläuft in der Regel horizontal.

Soweit nachfolgend die Begriffe "axial", "radial" und "tangential" verwendet werden, sind sie stets auf die Rotationsachse 5 bezogen. "Axial" bezeichnet eine Richtung parallel zur Rotationsachse 5. "Radial" bezeichnet eine Richtung orthogonal zur Rotationsachse 5 auf die Rotationsachse 5 zu bzw. von ihr weg. "Tangential" bezeichnet eine Richtung, die sowohl zur Axialrichtung als auch zur Radialrichtung orthogonal ist. "Tangential" bezeichnet also eine Richtung in konstantem radialem Abstand von der Rotationsachse 5 kreisförmig um die Rotationsachse 5 herum.

Die Lager 4 der Maschine sind gemäß FIG 2 als aktive (= elektromagnetische) Magnetlager 4 ausgebildet. In den aktiven Magnetlagern 4 ist der Rotor 2 berührungslos gelagert.

Die aktiven Magnetlager 4 können ausfallen. Aus diesem Grund ist den aktiven Magnetlagern 4 jeweils ein Fanglager 6 zugeordnet. Von den Fanglagern 6 wird der Rotor 2 bei einem Ausfall des jeweiligen aktiven Magnetlagers 4 gefangen. Das jeweilige Fanglager 6 weist eine auf der Rotorwelle 3 angeordnete Laufbuchse 7 und eine auf dem Stator 1 angeordnete Gleiteinrichtung 8 auf.

Bei einem Ausfall der aktiven Magnetlager 4 wird der Rotor 2, wie bereits erwähnt, von den Fanglagern 6 gefangen. In diesem Zustand kontaktiert die jeweilige Laufbuchse 7 die jeweilige Gleiteinrichtung 8 und gleitet dort. Die Magnetlager 4 bleiben weiterhin kontaktfrei.

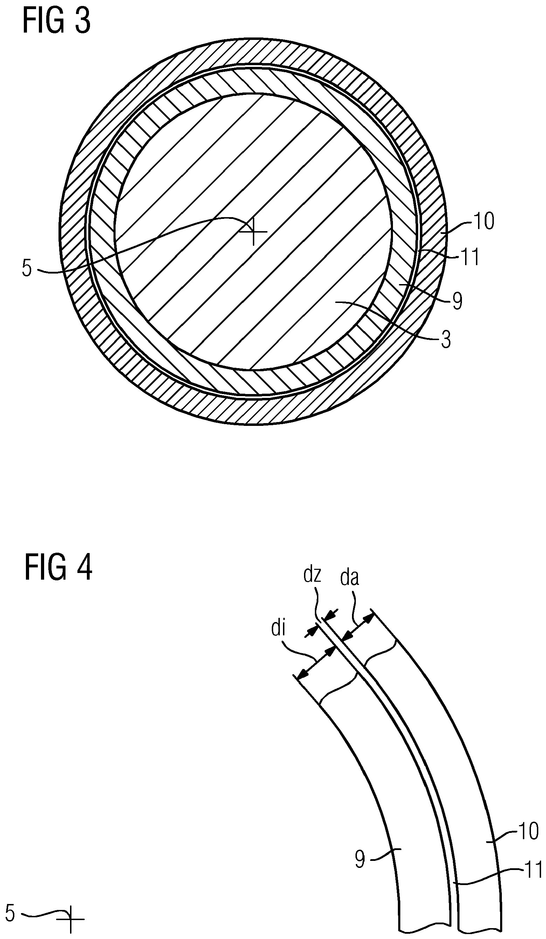

Die jeweilige Laufbuchse 7 weist - siehe auch die FIG 3 und 4 - einen Innenring 9 auf. Der Innenring 9 ist radial innen angeordnet. Mittels des Innenrings 9 ist die Laufbuchse 7 auf der Rotorwelle 3 befestigt und wird dort gehalten. Die jeweilige Laufbuchse 7 weist weiterhin einen Außenring 10 auf. Der Außenring 10 umgibt den Innenring 9 radial außen. Der Außenring 10 ist dasjenige Element der Laufbuchse 7, das bei einem Ausfall des jeweiligen aktiven Magnetlagers 4 in der Gleiteinrichtung 8 des jeweiligen Fanglagers 6 gleitet.

Der Innenring 9 und der Außenring 10 bestehen aus voneinander verschiedenen Materialien. Sie sind stoffschlüssig miteinander verbunden. Insbesondere können sie miteinander verschweißt sein. Die Verschweißung kann beispielsweise durch heißisostatisches Pressen (HIP), insbesondere durch ein Diffusionsschweißverfahren, bewirkt sein.

Das Material des Innenrings 9 kann nach Bedarf bestimmt sein. Insbesondere kann der Innenring 9 aus einem Metall bestehen, beispielsweise aus Stahl. Ebenso kann das Material des Außenrings 10 nach Bedarf bestimmt sein. Beispielsweise kann der Außenring 10 aus einer Kupferlegierung bestehen.

In einer besonders bevorzugten Ausgestaltung besteht der Außenring 10 aus einer Pulvermischung von Kupfer und Aluminiumoxid. Hierbei ist es möglich, Kupferpulver und Aluminiumoxidpulver in einem geeigneten (an sich bekannten) Mischungsverhältnis zu mischen und sodann zu verarbeiten. Alternativ ist es möglich, dass bereits die einzelnen Pulverkörner des Pulvers Kupfer und Aluminiumoxid in dem geeigneten Mischungsverhältnis enthalten. Das genannte Gemisch aus Kupfer und Aluminiumoxid weist den Vorteil auf, dass sowohl die Materialfestigkeit als auch die thermischen Eigenschaften nahezu unabhängig von der Wärmebehandlung erreicht werden können. Man kann daher die Wärmebehandlung beim Pressen darauf abstimmen, dass sich eine gute Verbindung zum Innenring 9 ergibt. Alternativ kann anstelle von Aluminiumoxid ein Carbid verwendet werden, insbesondere Aluminiumcarbid.

In manchen Fällen kann es möglich sein, dass der Innenring 9 und der Außenring 10 direkt miteinander verschweißt sind. In anderen Fällen kann es erforderlich sein, dass zwischen dem Innenring 9 und dem Außenring 10 eine Zwischenschicht 11 angeordnet ist. Die Zwischenschicht 11 kann insbesondere aus Nickel bestehen.

Die Zwischenschicht 11 weist, falls sie vorhanden ist, eine relativ geringe Materialdicke dz auf. Insbesondere ist ihre Materialdicke dz in der Regel maximal 0,2 mm, meist sogar unter 0,1 mm. Materialdicken di, da des Innenrings 9 und des Außenrings 10 liegen hingegen in der Regel im Bereich mehrerer mm, oftmals sogar oberhalb von 10 mm.

Es ist möglich, dass der Innenring 9 entsprechend der Darstellung in FIG 2 Ölbohrungen 12 aufweist. Die Ölbohrungen 12 können entsprechend der Darstellung in FIG 2 radial und/oder axial verlaufen. Unabhängig davon, ob die Ölbohrungen 12 vorhanden sind oder nicht, weist der Außenring 10 jedoch keine derartigen Bohrungen auf.

Die vorliegende Erfindung weist viele Vorteile auf. Insbesondere kann die relativ versagensanfällige Gestaltung, die sich ergibt, wenn die Laufbuchse 7 aus einem einzigen Material besteht, vermieden werden. Aufgrund der Aufteilung der Laufbuchse 7 in den Innenring 9 und den Außenring 10 können die beiden Ringe 9, 10 getrennt voneinander für ihre jeweilige Funktion optimiert werden. Weiterhin können die Ölbohrungen 12 eingebracht werden, ohne das Ausfallrisiko zu erhöhen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

## Patentansprüche

1. Maschine,
- wobei die Maschine einen Stator (1) und einen Rotor (2) aufweist,
- wobei der Rotor (2) eine Rotorwelle (3) aufweist,
- wobei die Rotorwelle (3) in Lagern (4) gelagert ist, so dass der Rotor (2) um eine Rotationsachse (5) rotierbar ist,
- wobei die Lager (4) als aktive Magnetlager (4) ausgebildet sind, in denen der Rotor (2) berührungslos gelagert ist,
- wobei den aktiven Magnetlagern (4) jeweils ein Fanglager (6) zugeordnet ist, von denen der Rotor (2) bei einem Ausfall des jeweiligen aktiven Magnetlagers (4) gefangen wird,
- wobei das jeweilige Fanglager (6) eine auf der Rotorwelle (3) angeordnete Laufbuchse (7) und eine auf dem Stator (1) angeordnete Gleiteinrichtung (8) aufweist,
- wobei die jeweilige Laufbuchse (7) einen radial innen angeordneten Innenring (9) aufweist, mittels dessen die Laufbuchse (7) auf der Rotorwelle (3) befestigt und gehalten ist,
- wobei die jeweilige Laufbuchse (7) einen den Innenring (9) radial außen umgebenden Außenring (10) aufweist, der bei einem Ausfall des jeweiligen aktiven Magnetlagers (4) in der Gleiteinrichtung (8) des jeweiligen Fanglagers (6) gleitet,
- wobei der Innenring (9) und der Außenring (10) aus voneinander verschiedenen Materialien bestehen und
- wobei der Innenring (9) und der Außenring (10) stoffschlüssig miteinander verbunden sind,
**dadurch gekennzeichnet, dass** der Innenring (9) und der Außenring (10) miteinander verschweißt sind.

2. Maschine nach Anspruch 1,
wobei der Innenring (9) aus einem Metall besteht.

3. Maschine nach Anspruch 2,
wobei der Innenring (9) aus Stahl besteht.

4. Maschine nach einem der Ansprüche 1 bis 3,
wobei der Außenring (10) aus einer Kupferlegierung besteht.

5. Maschine nach einem der Ansprüche 1 bis 3,
wobei der Außenring (10) aus einer Pulvermischung von Kupfer und Aluminiumoxid oder Kupfer und einem Carbid besteht.

6. Maschine nach Anspruch 5,
wobei die Pulvermischung aus Pulverkörnern besteht und dass die einzelnen Pulverkörner aus Kupfer und Aluminiumoxid bestehen.

7. Maschine nach einem der obigen Ansprüche,
wobei zwischen dem Innenring (9) und dem Außenring (10) eine Zwischenschicht (11) angeordnet ist.

8. Maschine nach Anspruch 7,
wobei die Zwischenschicht (11) aus Nickel besteht.

9. Maschine nach einem der obigen Ansprüche,
wobei der Innenring (9) radial und/oder axial verlaufende Ölbohrungen (12) aufweist und dass der Außenring (10) keine derartigen Bohrungen aufweist.

## Claims

1. Machine,
- wherein the machine has a stator (1) and a rotor (2),
- wherein the rotor (2) has a rotor shaft (3),
- wherein the rotor shaft (3) is supported in bearings (4) such that the rotor (2) can be rotated about an axis of rotation (5),
- wherein the bearings (4) are embodied as active magnetic bearings (4) in which the rotor (2) is supported in a contactless manner,
- wherein a back-up bearing (6) is associated with each of the active magnetic bearings (4), the rotor (2) being caught by the back-up bearings (6) in the event of a failure of the respective active magnetic bearing (4),
- wherein the respective back-up bearing (6) has a bushing (7) arranged on the rotor shaft (3) and a sliding device (8) arranged on the stator (1),
- wherein the respective bushing (7) has a radially inwardly arranged inner ring (9) by means of which the bushing (7) is fastened to and retained on the rotor shaft (3),
- wherein the respective bushing (7) has an outer ring (10) radially outwardly surrounding the inner ring (9), which outer ring (10) slides in the sliding device (8) of the respective back-up bearing (6) in the event of a failure of the respective active magnetic bearing (4),
- wherein the inner ring (9) and the outer ring (10) are made of different materials, and
- wherein the inner ring (9) and the outer ring (10) are joined to each other by a material bond
**characterised in that** the inner ring (9) and the outer ring (10) are welded to each other.

2. Machine according to claim 1,
wherein the inner ring (9) is made of a metal.

3. Machine according to claim 2,
wherein the inner ring (9) is made of steel.

4. Machine according to one of claims 1 to 3,
wherein the outer ring (10) is made of a copper alloy.

5. Machine according to one of claims 1 to 3,
wherein the outer ring (10) is made of a powder mixture of copper and aluminium oxide or copper and a carbide.

6. Machine according to claim 5,
wherein the powder mixture consists of powder grains and in that the individual powder grains consist of copper and aluminium oxide.

7. Machine according to one of the above claims,
wherein an intermediate layer (11) is arranged between the inner ring (9) and the outer ring (10).

8. Machine according to claim 7,
wherein the intermediate layer (11) is made of nickel.

9. Machine according to one of the above claims,
wherein the inner ring (9) has radially and/or axially extending oil ducts (12) and in that the outer ring (10) has no such ducts.

## Revendications

1. Machine,
- dans laquelle la machine a un stator ( 1 ) et un rotor ( 2 ),
- dans laquelle le rotor ( 2 ) a un arbre ( 3 ) de rotor,
- dans laquelle l'arbre ( 3 ) de rotor est monté dans des paliers ( 4 ) de manière à ce que le rotor ( 2 ) puisse tourner autour d'un axe ( 5 ) de rotation,
- dans laquelle les paliers ( 4 ) sont constitués sous la forme de paliers ( 4 ) magnétiques actifs dans lesquels le rotor ( 2 ) est monté sans contact,
- dans laquelle il est associé aux paliers ( 4 ) magnétiques actifs respectivement un palier de retenue, par lesquels le rotor ( 2 ) est retenu si le palier ( 4 ) magnétique actif est défaillant,
- dans laquelle le palier ( 6 ) de retenue respectif a une garniture ( 7 ) montée sur l'arbre ( 3 ) du rotor et un dispositif ( 8 ) de glissement monté sur le stator ( 1 ),
- dans laquelle la garniture ( 7 ) a une bague ( 9 ) intérieure montée à l'intérieur radialement, au moyen de laquelle la garniture ( 7 ) est fixée et retenue à l'arbre ( 3 ) du rotor,
- dans laquelle la garniture ( 7 ) a une bague ( 10 ) extérieure entourant à l'extérieur radialement la bague ( 9 ) intérieure, bague ( 10 ) extérieure qui, lorsque le palier ( 4 ) magnétique actif est défaillant, glisse dans le dispositif ( 8 ) de glissement du palier ( 6 ) de retenue,
- dans laquelle la bague ( 9 ) intérieure et la bague ( 10 ) extérieure sont en des matériaux différents l'un de l'autre et
- dans laquelle la bague ( 9 ) intérieure et la bague ( 10 ) extérieure sont reliées l'une à l'autre à coopération de matière,
**caractérisé en ce que** la bague ( 9 ) intérieure et la bague ( 10 ) extérieure sont soudées l'une à l'autre.

2. Machine suivant la revendication 1,
dans laquelle la bague ( 9 ) intérieure est en un métal.

3. Machine suivant la revendication 2,
dans laquelle la bague ( 9 ) intérieure est en acier.

4. Machine suivant l'une des revendications 1 à 3,
dans laquelle la bague ( 10 ) extérieure est en un alliage de cuivre.

5. Machine suivant l'une des revendications 1 à 3,
dans laquelle la bague ( 10 ) extérieure est en un mélange de poudre de cuivre et d'oxyde d'aluminium ou de cuivre et d'un carbure.

6. Machine suivant la revendication 5,
dans laquelle le mélange de poudre est constitué de grains de poudre et en ce que les divers grains de poudre sont en cuivre et en oxyde d'aluminium.

7. Machine suivant l'une des revendications précédentes,
dans laquelle une couche ( 11 ) intermédiaire est disposée entre la bague ( 9 ) intérieure et la bague ( 10 ) extérieure.

8. Machine suivant la revendication 7,
dans laquelle la couche ( 11 ) intermédiaire est en nickel.

9. Machine suivant l'une des revendications précédentes,
dans laquelle la bague ( 9 ) intérieure a des trous ( 12 ) pour de l'huile, s'étendant radialement et/ou axialement et en ce que la bague ( 10 ) extérieure n'a pas de trou de ce genre.
